(19) Europäisches Patentamt / European Patent Office / Office européen des brevets

(11) **EP 1 862 369 A1**

(12) **DEMANDE DE BREVET EUROPEEN**

(43) Date de publication:
**05.12.2007 Bulletin 2007/49**

(51) Int Cl.:
**B62D 1/10** *(2006.01)*

(21) Numéro de dépôt: **07290654.8**

(22) Date de dépôt: **22.05.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **30.05.2006 FR 0604807**

(71) Demandeur: **SNR ROULEMENTS**
**74000 Annecy (FR)**

(72) Inventeurs:
• **Beauprez, Jean-Michel**
**74270 Menthonnex Sous Clermont (FR)**
• **Lebrun-Damiens, Laurent**
**74600 Seynod (FR)**
• **Brisson, Sebastien**
**74130 Contamine Sur Arve (FR)**

(74) Mandataire: **Bredema**
**38, avenue de l'Opéra**
**75002 Paris (FR)**

(54) **Système d'actionnement compact d'arbre de direction comprenant un roulement à bagues en tôle emboutie**

(57) L'invention concerne un système d'actionnement de l'arbre d'une colonne de direction au moyen d'un volant de direction, ledit système comprenant un organe avant fixe (2) et un organe arrière mobile (1) monté en rotation par rapport à l'organe avant fixe (2) au moyen d'un roulement, ledit roulement comportant deux bagues (11, 12) réalisées préférentiellement en tôle emboutie comprenant chacune une partie axiale (18), des corps roulants (13) étant disposés entre les parties axiales pour permettre la rotation relative des bagues (11, 12), lesdites bagues comprenant en outre une extension annulaire (19) s'étendant généralement radialement depuis la partie axiale (18), chacune desdites extensions radiales étant en appui sur une surface transversale de l'organe (1, 2) sur lequel la partie axiale (18) est emmanchée.

L'invention concerne également un volant de direction pour véhicule automobile comprenant un tel système et une colonne de direction.

Fig. 1

EP 1 862 369 A1

## Description

L'invention concerne un système d'actionnement de l'arbre d'une colonne de direction au moyen d'un volant de direction, le système comprenant un organe avant fixe. L'invention concerne également un volant de véhicule automobile comprenant un tel système.

L'invention s'applique aux colonnes de direction conventionnelles composées d'une gaine tubulaire, fixée à la carrosserie du véhicule, guidant et supportant un arbre de direction. L'arbre de direction relie le volant de direction aux roues directrices du véhicule.

En variante, l'invention s'applique également aux systèmes de direction découplés dans lesquels la colonne de direction n'assure pas une liaison mécanique directe entre le volant et les roues. En effet, contrairement aux colonnes de direction conventionnelles, les colonnes de direction découplées ne sont pas associées à un boîtier de direction transformant le mouvement circulaire du volant de direction en déplacement angulaire de la bielle pendante qui provoque le braquage de roues.

L'organe avant fixe du système peut être destiné à servir de support fixe sur lequel il est, par exemple, possible de disposer un système de sécurité à coussin gonflable adapté à la morphologie du conducteur. L'organe avant fixe facilite également l'intégration de diverses commandes sur le volant et l'instrumentation de la direction du véhicule pour réaliser des mesures exploitées par des systèmes d'assistance à la conduite et de sécurité.

On connaît des systèmes d'actionnement comprenant un organe avant fixe et un organe arrière mobile auquel le volant de direction est destiné à être solidarisé. L'organe avant fixe est destiné à être solidarisé à la gaine de la colonne de direction et l'organe arrière mobile est monté en rotation par rapport à l'organe avant fixe.

Pour réaliser la rotation de l'organe arrière mobile par rapport à l'organe avant fixe, les systèmes comprennent un roulement standard comprenant des bagues massives emmanchées sur les organes et entre lesquelles des corps roulants sont disposés.

L'utilisation des bagues massives permet d'obtenir un système offrant une bonne rigidité et permettant une transmission satisfaisante des efforts agissant sur le système compte tenu de l'utilisation en tant que support fixe qui est faite de l'organe avant fixe.

Toutefois, les bagues massives requérant un espace disponible important, l'utilisation d'un roulement standard ne permet pas d'obtenir un système d'actionnement compact ce qui en augmente les contraintes d'intégration.

L'invention vise à résoudre ce problème en proposant un système d'actionnement combinant rigidité et compacité.

A cet effet, selon un premier aspect, l'invention propose un système d'actionnement de l'arbre d'une colonne de direction au moyen d'un volant de direction, ledit système comprenant un organe avant fixe destiné à être solidarisé à la gaine de la colonne de direction et un organe arrière mobile monté en rotation par rapport à l'organe avant fixe au moyen d'un roulement, ledit organe arrière mobile auquel le volant de direction est destiné à être solidarisé comprenant des moyens d'actionnement en rotation de l'arbre de la colonne de direction, le roulement comportant deux bagues comprenant chacune une partie généralement axiale emmanchée respectivement sur l'organe avant fixe et l'organe arrière mobile, lesdites parties axiales comportant des pistes de roulement entre lesquelles des corps roulants sont disposés pour permettre la rotation relative des bagues, lesdites bagues comprenant, en outre, une extension annulaire s'étendant généralement radialement depuis la partie axiale, chacune desdites extensions radiales étant en appui sur une surface transversale de l'organe sur lequel la partie axiale est emmanchée.

Ainsi, le roulement à bagues permet de réduire l'espace entre les organes et d'obtenir un système d'actionnement compact. Par ailleurs, les extensions radiales en appui sur les organes améliorent la rigidité du système ainsi que la transmission des efforts au sein du système.

Avantageusement, on peut prévoir que les extensions annulaires comprennent des moyens de fixation des bagues aux organes.

Selon une réalisation, le système comprend, en outre, des moyens d'association d'un système de sécurité à coussin gonflable, lesdits moyens étant solidaires de l'organe avant fixe. Dans un exemple particulier, les moyens d'association sont solidarisés à l'organe avant fixe par l'intermédiaire de l'extension annulaire de la bague emmanchée sur l'organe avant fixe. Les moyens d'association peuvent être réalisés sur un prolongement radial de l'extension annulaire, ledit prolongement comprenant des moyens de solidarisation pour le système de sécurité à coussin gonflable

Ainsi, lorsque le coussin gonflable est actionné, les efforts généralement axiaux sont encaissés puis transmis à l'organe avant fixe par l'intermédiaire les extensions radiales. Les extensions des bagues permettent alors au système de présenter une meilleure résistance aux efforts engendrés lors de l'actionnement du coussin gonflable.

De manière particulièrement avantageuse, le nombre N de corps roulants, le diamètre primitif Φ des bagues et le diamètre $D$ des corps roulants vérifient l'inégalité :

$$\frac{\pi\,\Phi}{N\,D} \geq 4$$

Le nombre N de corps roulants, bien que réduit, s'avère suffisant pour permettre un guidage en rotation satisfaisant du volant.

Préférentiellement, les pistes de roulement sont décalées axialement de sorte à former un chemin de roulement à contact oblique convergeant vers l'avant, pour assurer une reprise des efforts axiaux et un centrage.

Selon un mode de réalisation préférentiel, des moyens de solidarisation de l'organe avant fixe à la gaine sont montés pivotants dans une ouverture de l'organe arrière mobile. Préférentiellement, les moyens de solidarisation comprennent une couronne dentée avant solidaire de l'organe avant fixe, une couronne dentée arrière solidaire de la gaine de la colonne de direction et un organe oscillant à pignons satellites engrenant sur la couronne dentée avant et la couronne dentée arrière, l'organe oscillant étant monté sur l'organe arrière mobile de manière à tourner autour d'un axe géométrique fixe par rapport à l'organe arrière mobile. Il peut en outre être prévu un roulement arrière comportant deux bagues comprenant chacune une partie généralement axiale emmanchée respectivement sur la couronne dentée arrière et l'organe arrière mobile, lesdites parties axiales comportant des pistes de roulement entre lesquelles des corps roulants sont disposés pour permettre la rotation relative des bagues. Avantageusement, les bagues du roulement arrière comprennent une extension annulaire s'étendant généralement radialement depuis la partie axiale, chacune desdites extensions radiales étant en appui sur une surface transversale de l'organe sur lequel la partie axiale est emmanchée.

L'extension radiale de la bague solidaire de la couronne dentée arrière comporte des moyens de solidarisation pour permettre la solidarisation de la couronne dentée arrière à la gaine de la colonne de direction.

Avantageusement, les pistes de roulement du roulement arrière sont décalées axialement de sorte à former un chemin de roulement à contact oblique convergeant vers l'arrière, ce qui contribue à la stabilité du guidage en rotation.

Les bagues peuvent être massive. Toutefois, selon un mode de réalisation préféré, elles sont réalisées en tôle emboutie, ce qui leur confère une meilleure compacité.

Selon un deuxième aspect, l'invention propose un roulement, notamment pour système d'actionnement de colonne de direction, comportant deux bagues comprenant chacune une partie généralement axiale, lesdites parties axiales comportant des pistes de roulement entre lesquelles des corps roulants (13) sont disposés pour permettre la rotation relative des bagues, lesdites bagues comprenant en outre une extension annulaire s'étendant généralement radialement depuis la partie axiale pour former une surface d'appui, dans lequel le nombre N de corps roulants, le diamètre primitif Φ des bagues et le diamètre D des corps roulants vérifient l'inégalité :

$$\frac{\pi\,\Phi}{N\,D} \geq 4$$

Préférentiellement les pistes de roulement du roulement arrière sont décalées axialement de sorte à former un chemin de roulement à contact oblique convergeant vers l'arrière. Préférentiellement, les bagues sont en tôle emboutie.

Le roulement ainsi défini est compact, peu onéreux et facile à monter du fait de la réduction du nombre de corps roulants, tout en permettant une bonne reprise des efforts lors du déclenchement d'un coussin de sécurité gonflable.

Selon un troisième aspect, l'invention propose un volant de direction pour véhicule automobile comprenant un système selon le premier aspect et une armature qui est solidaire de l'organe mobile.

Selon un quatrième aspect, l'invention propose une colonne de direction comprenant une gaine constituant une partie fixe par rapport au châssis du véhicule, un arbre de direction, et un volant de direction selon le troisième aspect de l'invention.

D'autres objets et avantages de l'invention apparaîtront au cours de la description qui suit, faite en référence aux dessins annexés, dans lesquels :

- la figure 1 est une vue de la face avant d'un système d'actionnement de l'arbre d'une colonne de direction selon un mode de réalisation de l'invention ;

- la figure 2 est une vue partielle en coupe longitudinale selon le plan II-II de la figure 1 ;

- la figure 3 est un détail de la figure 2 ;

- la figure 4 est une vue de dessous du système d'actionnement de la figure 1 ;

- la figure 5 est vue en coupe transversale selon le plan IV-IV de la figure 3 ;

- les figures 6 et 7 sont des vues respectivement de face et en perspective d'un roulement selon une variante du mode de réalisation de la figure 1.

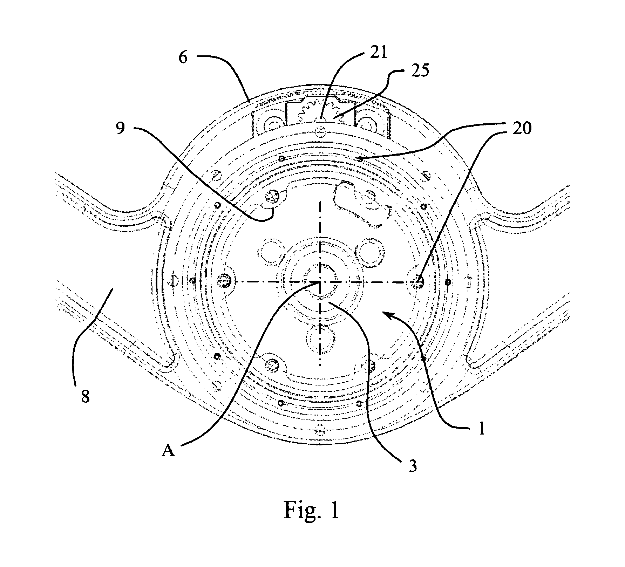

Les figures 1 à 5 représentent un système d'actionnement de l'arbre d'une colonne de direction d'un véhicule automobile au moyen d'un volant de direction. La colonne de direction est agencée pour, de façon mécanique, hydraulique ou électrique, transmettre le couple ou l'angle de braquage aux roues du véhicule. Le système d'actionnement comprend un organe mobile 1 auquel le volant de direction est destiné à être associé et un organe fixe 2 qui est entouré par le volant de direction. L'organe mobile 1 est monté en rotation par rapport à l'organe fixe 2 .

L'arbre de la colonne de direction, non représenté, est monté en rotation autour de son axe dans une gaine, également non représentée, solidaire du châssis du véhicule. L'organe mobile 1 comprend des moyens d'actionnement en rotation de l'arbre de la colonne de direction. L'organe mobile 1 est une pièce de forme générale cylindrique d'axe A destinée à être montée coaxialement à l'axe de l'arbre.

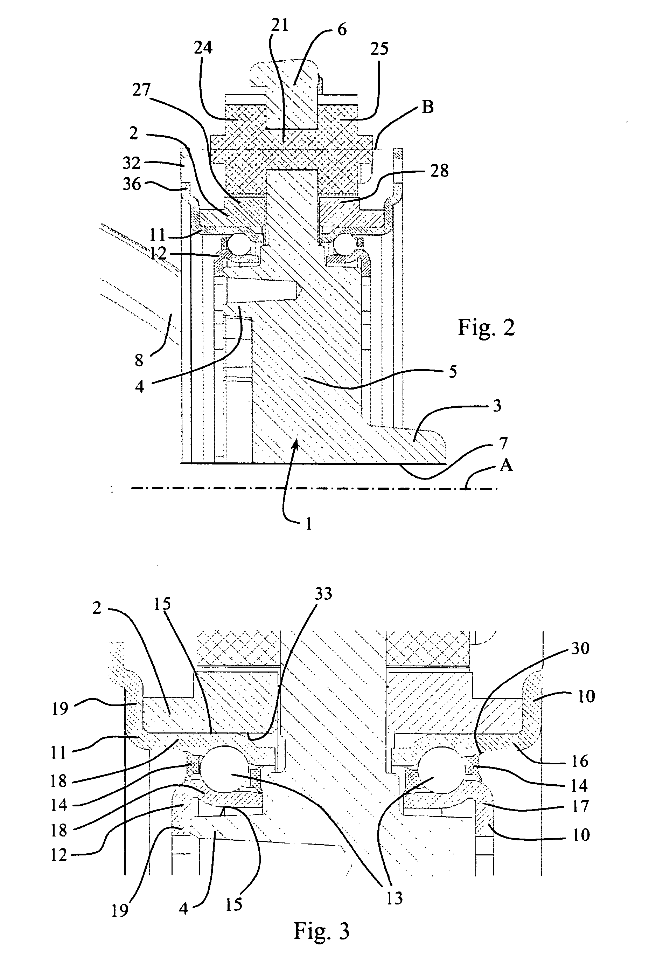

Dans la description qui suit, les termes « axial », « longitudinal » ou « latéral » sont définis par rapport à un plan parallèle à l'axe A et les termes « radial » ou « transversal » sont définis par rapport à un plan perpendiculaire à l'axe A. D'autre part, les termes « extérieur » et « intérieur » sont définis par rapport à des plans axiaux respectivement éloignés et à proximité de l'axe A. Les termes « avant » et « arrière » sont définis par rapport à des plans situés respectivement côté conducteur, c'est-à-dire du côté gauche sur la figure 2, et côté colonne de direction, c'est-à-dire du côté droit sur la figure 2.

L'organe arrière mobile 1 comprend un moyeu central cylindrique 3 et une jupe annulaire latérale 4 disposée autour du moyeu 3 et reliée à celui-ci par une paroi généralement radiale 5. Le moyeu central 3, la jupe latérale 4 et la paroi radiale 5 sont, par exemple, venus de matière de sorte à réaliser un organe arrière mobile 1 monobloc et rigide.

Pour permettre la solidarisation du volant de direction, l'organe arrière mobile 1 peut également comprendre une extension radiale 6 s'étendant depuis la surface latérale extérieure de la jupe 4 et venue de matière avec celle-ci. Dans des exemples particuliers, on peut prévoir que l'organe arrière mobile 1 comprenne le volant de direction, un prolongement de l'extension radiale 6 formant une armature 8 du volant. Dans des modes de réalisation, la solidarisation du volant à l'extension radiale 6 peut être réalisé par des vis ou des boulons au travers de trous réalisés sur l'extension radiale 6 et une armature 8 du volant.

Les moyens d'actionnement en rotation de l'arbre de la colonne de direction comprennent un alésage 7 centré sur l'axe A et réalisé dans le moyeu central 3. Cet alésage 7 est destiné à permettre l'immobilisation à la fois en rotation et axialement de l'organe arrière mobile 1 sur l'arbre de la colonne de direction de sorte que l'axe A soit confondu avec l'axe de l'arbre.

Pour ce faire, l'alésage 7 peut comprendre, sur des portions extrêmes avant et arrière, des surfaces tronconiques s'écartant de l'axe A et, sur une partie axiale, des cannelures. La surface tronconique arrière sert de surface de butée sur laquelle vient s'appuyer une surface complémentaire de l'arbre de direction. Celui-ci présente, en outre, sur son extrémité avant, une zone cannelée et un trou taraudé destinés à coopérer respectivement avec les cannelures de l'alésage 7 et le filetage d'une vis. L'invention ne se restreint pas à ce type d'immobilisation en rotation et axialement et tout autre type connu de solidarisation d'un organe 1 pourvu d'un alésage 7 sur un arbre de direction entre dans le cadre de l'invention.

Selon le mode de réalisation représenté, l'organe avant fixe 2 est une pièce généralement cylindrique comprenant un alésage cylindrique 33 dont l'axe est coaxial à l'axe A et dans lequel la jupe latérale 4 de l'organe arrière mobile 1 est monté en rotation par rapport à l'organe avant fixe 2 au moyen d'un roulement.

Le roulement comporte deux bagues 11, 12 comprenant chacune une partie généralement axiale 18 emmanchée respectivement sur l'organe avant fixe 2 et l'organe arrière mobile 1. Les parties axiales 18 comportent des pistes de roulement entre lesquelles des corps roulants, tels que des billes 13, équirépartis par une cage 14 sont disposés pour permettre la rotation relative des bagues 11, 12. En particulier, les bagues fixe 11 et mobile 12 sont emmanchées sur des surfaces d'emmanchement 15 en regard réalisées respectivement sur la surface de l'alésage 33 et sur une surface latérale extérieure avant de la jupe latérale 4. Les pistes de roulement sont décalées axialement de sorte à former un chemin de roulement à contact oblique convergeant vers l'avant.

Par ailleurs, le système peut comprendre des moyens d'étanchéité du roulement vis-à-vis de l'extérieur, en particulier de la poussière et de l'humidité. Ces moyens permettent également de protéger le reste du système vis-à-vis de la graisse de lubrification du roulement.

Les bagues 11, 12 sont réalisées en tôle emboutie. Une telle réalisation permet de limiter la quantité de matière utilisée pour former les bagues 11, 12 et de ce fait leur épaisseur. L'espace nécessaire entre les organes 1, 2 pour l'emmanchement des bagues 11, 12 peut alors être réduit ce qui permet d'obtenir un système plus compact. En outre, les bagues 11, 12 réalisées en tôle emboutie peuvent être adaptées à des fonctions autres que celle de roulement par une mise en forme simple et appropriée.

Ainsi, les bagues 11, 12 comprennent chacune une extension annulaire 19 s'étendant généralement radialement depuis la partie axiale 18 respectivement vers l'extérieur et vers l'intérieur. La partie axiale 18 et l'extension radiale 19 de chaque bague 11, 12 sont agencées de sorte que l'extension radiale 19 présente une surface transversale en appui sur une surface transversale de l'organe 1, 2 correspondant.

De cette manière, l'appui des bagues 11, 12 sur les organes 1, 2 facilite le positionnement et améliore la rigidité du système en augmentant les surfaces de contact entre les bagues 11, 12 et les organes 1, 2. De plus, les extensions annulaires 19 peuvent comprendre des moyens de fixation des bagues 11, 12 aux organes 1, 2 pour améliorer le positionnement des organes 1, 2 et la rigidité du système. Sur les figures, ces moyens de fixation se présentent sous la forme de trous 20 réalisés sur une partie de l'extension radiale 19 en appui sur l'organe et dans lesquels des vis, des boulons ou analogues peuvent être disposés.

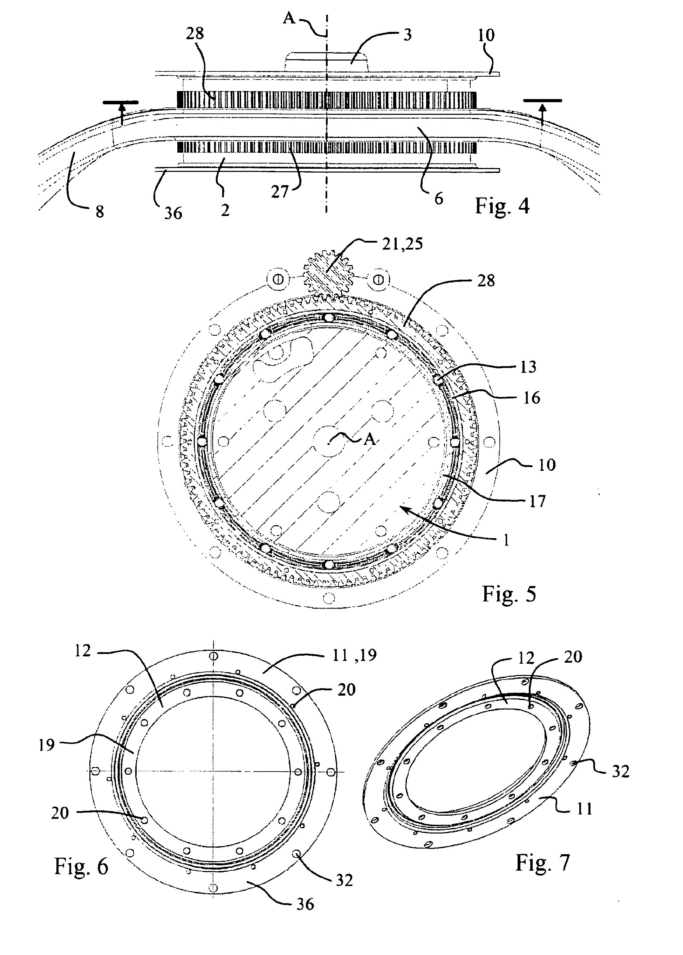

Sur la figure 1, l'extension radiale 19 de la bague 12 emmanchée sur l'organe arrière mobile 1 présente des lobes 9 dont la dimension transversale est supérieure à celle du reste de l'extension 19. Les trous 20 de la bague 12 peuvent être réalisés sur les lobes 9 équirépartis. En variante représentée sur les figures 6 et 7, l'extension radiale 19 de la bague 12 présente une dimension transversale constante, les trous 20 étant équirépartis sur l'extension 19.

Pour empêcher sa rotation, l'organe avant fixe 2 doit être solidarisé à une partie fixe solidaire du châssis du véhicule. En particulier, l'organe avant fixe 2 est destiné à être solidarisé à la gaine de la colonne de direction. Le système comprend alors des moyens de solidarisation à la gaine montés pivotant dans une ouverture de l'organe arrière mobile 1.

Les moyens de solidarisation comprennent une pièce cylindrique 21 guidée en rotation par rapport à l'extension radiale 6 autour d'un axe B parallèle à l'axe A. La pièce cylindrique 21 comprend un pignon denté avant 24 et un pignon denté arrière 25 analogues disposés respectivement de part et d'autre de l'extension radiale 6. Pour faciliter le montage, la pièce 21 peut être réalisée en deux parties comprenant chacune un pignon 24, 25 et un alésage centré sur l'axe B pour pouvoir associer les deux parties par exemple au moyen d'une vis, d'un boulon ou analogue. On peut toutefois prévoir d'associer les deux parties par soudage.

Les pignons dentés 24, 25 engrènent sur des couronnes dentées avant 27 et arrières 28 analogues solidaires respectivement de l'organe avant fixe 2 et de la gaine de la colonne de direction.

La couronne dentée avant 27 peut être emmanchée ou venue de matière sur la surface latérale de l'organe avant fixe 2.

La couronne dentée arrière 28 est montée en rotation par rapport à l'organe arrière mobile 1. En particulier, on peut prévoir un roulement comportant deux bagues 16, 17 comprenant chacune une partie généralement axiale emmanchée respectivement sur la couronne dentée arrière 28 et l'organe arrière mobile 1. Les parties axiales comportent des pistes de roulement entre lesquelles des corps roulants, notamment des billes 13, équirépartis par une cage 14 sont disposés pour permettre la rotation relative des bagues 16, 17. La cage est de préférence une cage filtre comme représenté en détail sur la figure 3, comportant une cloison annulaire 30 formant une barrière protégeant le roulement des agressions extérieures. En particulier, les bagues fixe 16 et mobile 17 sont emmanchées sur des surfaces en regard réalisées respectivement sur une surface latérale intérieure de la couronne arrière 28 et sur une surface latérale extérieure arrière de la jupe latérale 4. Les pistes de roulement sont décalées axialement de sorte à former un chemin de roulement à contact oblique convergeant vers l'arrière.

Dans le mode de réalisation représenté, le roulement entre la couronne arrière 28 et l'organe arrière mobile 1 est analogue au roulement entre les organes fixe 2 et mobile 1. Les bagues 16, 17 sont réalisées en tôle emboutie et comprennent chacune une extension annulaire radiale 10 respectivement vers l'extérieur et vers l'intérieur. L'extension radiale 19 de la bague mobile 17 présente une surface transversale en appui sur une surface transversale de l'organe mobile 1. Quand à l'extension radiale 10 de la bague fixe 16, elle est agencée pour permettre la solidarisation de la couronne dentée arrière 28 à la gaine de la colonne de direction. L'extension radiale peut comprendre des moyens de solidarisation tels des trous destinés à recevoir des vis, des boulons ou analogues.

On peut toutefois prévoir que la couronne dentée arrière 28 soit solidarisée à la gaine ou au châssis du véhicule par emmanchement ou tout autre moyen connu.

Ainsi, lorsque le conducteur du véhicule tourne le volant de direction, le pignon arrière 25 roule sans glisser du fait de l'engrènement sur la couronne dentée arrière 28. La pièce cylindrique 21 tourne sur elle-même autour de l'axe B par rapport à l'extension radiale 6 et engrène sur la couronne dentée avant 27 de sorte que l'organe avant fixe 2 ne tourne pas.

L'organe avant 2 est fixe du fait de l'utilisation de pignons 24, 25 et de couronnes 27, 28 analogues à l'avant et à l'arrière du système. Une différence entre, par exemple, le diamètre, le nombre de dents ou le pas des couronnes 27, 28 et/ou des pignons 24, 25 avant et arrière provoquerait la rotation de l'organe avant 2 dans le sens opposé à celui dans lequel le conducteur tourne le volant.

La combinaison des chemins de roulement à contact oblique convergeant vers l'avant et vers l'arrière améliore la stabilité du guidage en rotation de l'organe arrière mobile 1 ce qui permet d'obtenir un système compact et rigide.

Le nombre de billes 13 peut être faible par rapport aux dimensions du roulement, du fait des faibles sollicitations mécaniques du système. Si l'on considère le rapport

$$\Delta = \frac{\pi\,\Phi}{N\,D}$$

où, N est le nombre de billes, $\Phi$ le diamètre primitif du roulement, mesuré au centre des billes, et D le diamètre des billes, on peut réaliser le système avec un rapport $\Delta$ supérieur à 4, ou même supérieur à 6.

Le système d'actionnement tel qu'il vient d'être décrit permet de transmettre à l'arbre de direction l'angle de rotation donné par le conducteur au volant, tout en disposant d'un organe avant fixe 2 faisant face au conducteur. Selon le mode de réalisation décrit, le roulement assurant la rotation de l'organe arrière mobile 1 à l'intérieur de l'organe avant fixe 2 est accessible par la face avant du système ce qui présente de nombreux avantages notamment pour l'instrumentation du système. D'autre part, cet organe avant 2 peut être destiné à servir de support pour un coussin gonflable de sécurité et/ou pour diverses commandes concernant la conduite ou le confort du véhicule.

Sur les figures, le système comprend des moyens d'association d'un système de sécurité à coussin gonflable solidaire de l'organe avant fixe 2. En particulier, les moyens d'association sont solidaires de l'organe avant fixe 2 par l'intermédiaire de l'extension annulaire 19 de la bague 11 emmanchée sur l'organe avant fixe 2.

Sur les figures, les moyens d'association sont réalisés sur un prolongement radial 36 de l'extension annulaire 19. Le prolongement 36 comprend des trous de fixation 32 formant moyens de solidarisation pour le système de sécurité à coussin gonflable.

Dans d'autres modes de réalisation, les moyens d'association peuvent comprendre un support radial généralement plat pourvu d'une ouverture centrale réalisée pour permettre le montage du roulement. Le support comporte une portion au niveau de l'ouverture dont les surfaces transversales sont en contact avec la surface transversale arrière de l'extension annulaire 19 et la surface transversale avant de l'organe avant fixe 2. Par ailleurs, la portion comprend des moyens de fixation sous la forme de trous agencés sur le support pour pouvoir coopérer avec les moyens de fixation 20 de la bague 11 à l'organe avant fixe 2.

L'augmentation des surfaces de contact entre les bagues 11, 12 et les organes 1, 2 améliorent la répartition et la transmission des efforts lors de l'actionnement du coussin gonflable ce qui limite la détérioration du système.

Ainsi, lorsque le coussin gonflable de sécurité est actionné, des efforts généralement axiaux sont engendrés sur les moyens d'association que sont le support ou le prolongement 36. La partie des moyens d'association en appui sur l'organe avant fixe 2 peut alors transmettre les efforts audit organe. L'orientation des chemins de roulement convergeant vers l'avant et vers l'arrière permet aux roulements de supporter et de transmettre les efforts. Le système ainsi réalisé permet donc d'encaisser de manière efficace et sans risque de détérioration les efforts lors de l'actionnement du système de sécurité à coussin gonflable.

**Revendications**

**1.** Système d'actionnement de l'arbre d'une colonne de direction au moyen d'un volant de direction, ledit système comprenant un organe avant fixe (2) destiné à être solidarisé à une partie fixe solidaire du châssis du véhicule et un organe arrière mobile (1) monté en rotation par rapport à l'organe avant fixe (2) au moyen d'un roulement, ledit organe arrière mobile (1) auquel le volant de direction est destiné à être solidarisé comprenant des moyens d'actionnement (7) en rotation de l'arbre de la colonne de direction, le roulement comportant deux bagues (11, 12) comprenant chacune une partie généralement axiale (18) emmanchée respectivement sur l'organe avant fixe (2) et l'organe arrière mobile (1), lesdites parties axiales comportant des pistes de roulement entre lesquelles des corps roulants (13) sont disposés pour permettre la rotation relative des bagues (11, 12), lesdites bagues comprenant, en outre, une extension annulaire (19) s'étendant généralement radialement depuis la partie axiale (18), chacune desdites extensions radiales étant en appui sur une surface transversale de l'organe (1, 2) sur lequel la partie axiale (18) est emmanchée.

**2.** Système selon la revendication 1 , dans lequel les extensions annulaires (19) comprennent des moyens de fixation (20) des bagues (11, 12) aux organes (1, 2).

**3.** Système selon la revendication 1 ou la revendication 2, comprenant en outre des moyens d'association d'un système de sécurité à coussin gonflable, lesdits moyens d'association étant solidaires de l'organe avant fixe (2).

**4.** Système selon la revendication 3, dans lequel les moyens d'association sont solidarisés à l'organe avant fixe (2) par l'intermédiaire de l'extension annulaire (19) de la bague (11) emmanchée sur l'organe avant fixe (2).

**5.** Système selon la revendication 4, dans lequel les moyens d'association sont réalisés sur un prolongement radial (36) de l'extension annulaire (19), ledit prolongement comprenant des moyens de solidarisation (32) pour le système de sécurité à coussin gonflable.

**6.** Système selon l'une quelconque des revendications précédentes, dans lequel le nombre N de corps roulants (13), le diamètre primitif Φ des bagues et le diamètre D des corps roulants (13) vérifient l'inégalité :

$$\frac{\pi\,\Phi}{N\,D} \geq 4$$

**7.** Système selon l'une quelconque des revendications précédentes, dans lequel les pistes de roulement sont décalées axialement de sorte à former un chemin de roulement à contact oblique convergeant vers l'avant.

**8.** Système selon l'une quelconque des revendications précédentes, comprenant des moyens de solidarisation (21) de l'organe avant fixe (2) à la gaine, lesdits moyens de solidarisation étant montés pivotants dans une ouverture de l'organe arrière mobile (1).

**9.** Système selon la revendication 8, dans lequel les moyens de solidarisation comprennent une couronne dentée avant (27) solidaire de l'organe avant fixe (2), une couronne dentée arrière (28) solidaire de la gaine de la colonne de direction et un organe oscillant à pignons satellites (21) engrenant sur la couronne dentée avant et la couronne dentée arrière, l'organe oscillant étant monté sur l'organe arrière mobile de manière à tourner autour d'un axe géométrique fixe par rapport à l'organe arrière mobile.

**10.** Système selon la revendication 9, comportant en outre un roulement arrière comportant deux bagues (16, 17) comprenant chacune une partie généralement axiale (18) emmanchée respectivement sur la couronne dentée arrière (28) et l'organe arrière mobile (1), lesdites parties axiales comportant des pistes de roulement entre lesquelles des corps roulants (13) sont disposés pour permettre la rotation relative des bagues (16, 17).

**11.** Système selon la revendication 10, dans lequel les bagues du roulement arrière comprennent une extension annulaire (19) s'étendant généralement radialement depuis la partie axiale (18), chacune desdites extensions radiales étant en appui sur une surface transversale de l'organe (1, 28) sur lequel la partie axiale (18) est emmanchée.

**12.** Système selon la revendication 11 dans lequel l'extension radiale (10) de la bague (16) solidaire de la couronne dentée arrière (28) comporte des moyens de solidarisation pour permettre la solidarisation de la couronne dentée arrière (28) à la gaine de la colonne de direction.

**13.** Système selon l'une quelconque des revendications précédentes, dans lequel l'organe avant fixe (2) comprend un alésage (33) dans lequel une jupe latérale (4) de l'organe arrière mobile (1) est montée en rotation au moyen du roulement.

**14.** Système selon l'une quelconque des revendications précédentes, dans lequel les pistes de roulement du roulement arrière sont décalées axialement de sorte à former un chemin de roulement à contact oblique convergeant vers l'arrière.

**15.** Système selon l'une quelconque des revendications précédentes, dans lequel les bagues sont réalisées en tôle emboutie.

**16.** Volant de direction pour véhicule automobile, comprenant un système selon l'une quelconque des revendications 1 à 15 et une armature (8) de volant solidaire de l'organe arrière mobile (1).

**17.** Colonne de direction de véhicule automobile, comprenant une gaine constituant une partie fixe par rapport au châssis du véhicule, un arbre de direction, et un volant selon la revendication 16.

Fig. 1

Fig. 2

Fig. 3

Fig. 4

Fig. 5

Fig. 6

Fig. 7

**Office européen des brevets**

# RAPPORT DE RECHERCHE EUROPEENNE

Numéro de la demande

EP 07 29 0654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 297 558 A2 (TOYODA GOSEI KK [JP]) 4 janvier 1989 (1989-01-04) * colonne 4, ligne 12 - ligne 28 * * colonne 4, ligne 47 - ligne 48 * * colonne 5, ligne 11 - ligne 19 * * figures 1,2 * ----- | 1,8-10, 13,16,17 | INV. B62D1/10 |
| A | FR 2 872 768 A1 (SKF FRANCE SA [FR]) 13 janvier 2006 (2006-01-13) ----- | | |

DOMAINES TECHNIQUES RECHERCHES (IPC)

B62D
F16C

Le présent rapport a été établi pour toutes les revendications

| Lieu de la recherche | Date d'achèvement de la recherche | Examinateur |
|---|---|---|
| La Haye | 7 septembre 2007 | Kulozik, Ehrenfried |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 29 0654

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-09-2007

| Document brevet cité au rapport de recherche | | Date de publication | Membre(s) de la famille de brevet(s) | | Date de publication |
|---|---|---|---|---|---|
| EP 0297558 | A2 | 04-01-1989 | DE | 3889778 D1 | 07-07-1994 |
| | | | DE | 3889778 T2 | 06-10-1994 |
| | | | US | 4868355 A | 19-09-1989 |
| FR 2872768 | A1 | 13-01-2006 | DE | 102005032344 A1 | 02-02-2006 |

EPO FORM P0460

Pour tout renseignement concernant cette annexe : voir Journal Officiel de l'Office européen des brevets, No.12/82